(19) Europäisches Patentamt
European Patent Office
Office européen des brevets

(11) Publication number: **0 037 124**
**B1**

(12) **EUROPEAN PATENT SPECIFICATION**

(45) Date of publication of patent specification: **10.06.87**

(51) Int. Cl.$^4$: **C 08 G 65/44,** C 08 G 65/40, C 08 F 283/08

(21) Application number: **81102440.5**

(22) Date of filing: **31.03.81**

(54) **Polyphenylene ether copolymers and graft copolymers.**

(30) Priority: **31.03.80 JP 42171/80**

(43) Date of publication of application:
**07.10.81 Bulletin 81/40**

(45) Publication of the grant of the patent:
**10.06.87 Bulletin 87/24**

(84) Designated Contracting States:
**BE DE FR GB IT NL**

(56) References cited:
**EP-A-0 017 939**
**EP-A-0 025 200**
**DE-B-1 801 230**
**DE-B-2 442 238**

(73) Proprietor: **KANEGAFUCHI KAGAKU KOGYO KABUSHIKI KAISHA**
**2-4 Nakanoshima 3-chome**
**Kita-ku Osaka-shi Osaka-fu (JP)**

(72) Inventor: **Somemiya, Akiyoshi**
**440-19, Higashiyama Ohkuradani**
**Akashi-shi Hyogo-ken (JP)**
Inventor: **Miyashita, Shunitsu**
**1-3-608, 1-chome, Yoshida-cho Hyogo-ku**
**Kobe-shi Hyogo-ken (JP)**
Inventor: **Azuma, Masaaki**
**96-1, Aza-Takigahira Shioya-cho Tarumi-ku**
**Kobe.shi Hyogo-ken (JP)**

(74) Representative: **Vossius & Partner**
**Siebertstrasse 4 P.O. Box 86 07 67**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 037 124 B1

**Description**

This invention relates to novel polyphenylene ether copolymers and graft copolymers, and more particularly, to novel heat resistant high polymers obtained by oxidative coupling copolymerization of phenols and aniline derivatives.

Polyphenylene ethers are high molecular compounds obtained by the oxidative coupling polymerization of phenols, and have improved mechanical properties; see US—A—3 306 875. Particularly, thermoplastic resins obtained by blending them with polystyrene polymers are widely used as they are well balanced in chemical properties, physical properties and moldability; see US—A— 3 383 435.

Polyphenylene ethers are, however, not always satisfactory in resistance to deterioration by heat or photo-oxidation. Attempts have recently been made to improve the mechanical properties of engineering resins by incorporating fibers of fillers, and it is common to use such fibers or fillers for surface treatment for that purpose.

Polyphenylene ethers are usually prepared by dehydration and condensation of phenols by oxidative coupling as hereinabove stated. This is a special polycondensation reaction, and there is a limitation to applicable monomers. The polyphenylene ether copolymers obtained by oxidative coupling as heretofore proposed are all of the polyether structure. For example, they include halophenol copolymers as disclosed in JP—B—14833/1964 and JP—B—22269/1965, 2,3,6-trimethylphenol copolymers as disclosed in JP—B—17880/1977, cresol copolymers as disclosed in JP—B—144097/1977, bisphenol copolymers as disclosed in JP—B—5864/1976, naphthol copolymers as disclosed in JP—B—104298/1975, and 2,6-diphenylphenol copolymers as disclosed in JP—A—56298/1978.

It is an object of this invention to provide novel polyphenylene ether copolymers obtained by oxidative coupling of phenols and aniline derivatives, and having improved thermal stability and chemical properties.

It is another object of this invention to provide novel polyphenylene ether copolymers of the polyphenylene ether structure having improved chemical properties.

The polyphenylene ether copolymers of this invention may be obtained by the oxidative coupling polymerization of 60 to 99.9 mol % of at least one phenol represented by formula (1), and 0.1 to 40 mol % of at least one aniline derivative represented by formula (2):

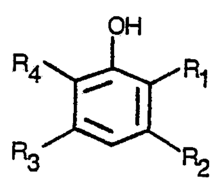

(1)

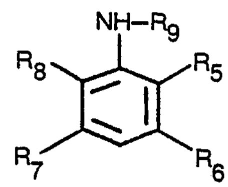

(2)

wherein $R_1$ to $R_8$ each stand for hydrogen, a hydrocarbon group, or a substituted hydrocarbon group, and $R_9$ stands for a hydrocarbon or substituted hydrocarbon group usually having 1 to 18 carbon atoms.

Typical examples of the phenols represented by the above structural formula include o-cresol, 2,6-dimethylphenol, 2,6-diethylphenol, 2,6-diphenylphenol, 2,3,6-trimethylphenol, 2,6-dibutylphenol, 2-methyl-6-cyclohexylphenol, and 2-methyl-6-ethylphenol. Typical examples of the anilines include N-methylaniline, N-ethylaniline, N-butylaniline, diphenylamine, 2-methyl-N-phenylaniline, N-methyl-2-methylaniline, 2,6-dimethyl-N-methylaniline, and 3-methyldiphenylamine. These phenols and anilines may both be used either individually or in the form of a mixture of two or more thereof.

The structural unit of the copolymer according to this invention may be represented by the following general formulas:

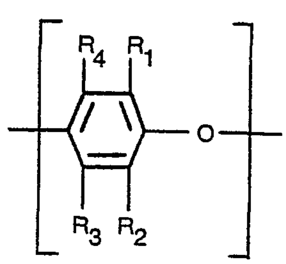

,

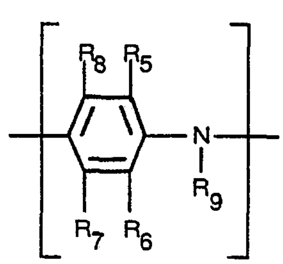

(1) (2)

The copolymers of this invention may be manufactured by a method which is substantially identical to the known methods for the polymerization of phenols by oxidative coupling. Accordingly, the

polymerization is carried out by introducing a free oxygen-containing gas into a vigorously stirred solution containing the starting monomers, a catalyst, a promotor and a solvent. Examples of useful catalysts include a copper-amine complex, a cobalt-amine complex, a manganese-alkoxide complex, bis(salicylaldehyde)ethylenediiminatocobalt, bis(salicylaldehyde)ethylenediiminatomanganese, bis(salicylaldehyde)alkyliminatomanganese, and a manganese-amine-phenoxide complex. A promotor selected from the group of amines, alkalis, alkoxides and phenoxides may be used. It is desirable to use a catalyst containing manganese, particularly if it is intended to produce a polymer having a high polymerization degree. The quantity of the catalyst may be equal to, or slightly greater than that which is employed for the conventional preparation of polyphenylene ethers. It is possible to use conventional organic solvents for the reaction, including benzene, toluene, chloroform, methylene chloride, acetone, methyl ethyl ketone, ethanol, methanol, isopropanol, ethyl acetate, tetrahydrofuran, dimethylformamide, and dimethylsulfoxide. It is possible to use only a single solvent, or a mixture of two or more solvents. The polymerization may be carried out at a temperature which is equal to the temperature employed for the homopolymerization of phenols, but usually not higher than 80°C, so that any possible side reaction may be prevented.

A polymer which is suitable as an engineering resin can be obtained if the reaction is performed for a period of three minutes to 10 hours, preferably five minutes to five hours, in the case of batch polymerization. High polymers of this invention can also be manufactured by continuous polymerization in accordance with a method which is substantially identical to those disclosed in, for example, JP—B—28919/1974 and JP—B—17077/1977 for the continuous polymerization of phenols.

The method for the recovery of the product depends on the mode of polymerization employed. If the product is obtained from the reaction system in the form of a solution, an alcohol containing a small quantity of an acid, such as hydrochloric acid, may be added thereinto for its recovery. If precipitation polymerization is employed as described in JP—B—28919/1974, a granular precipitate is separated from the liquid reaction product, and washed with an alcohol containing a small quantity of an acid, whereby a colorless or light yellow powder is obtained.

The copolymer of this invention may contain 0.1 to 40 mol % of at least one aniline derivative. If it has a high aniline content, it has a brown color. Accordingly, if any such color of the product is objected to as in an engineering resin, it is preferable that not more than 10 mol % of the aniline derivative(s) be incorporated therein, though this percentage does not limit the scope of this invention.

A suitable polymerization degree depends on the purpose for which the product will be used. If it is used as an engineering resin, it should have a polymerization degree of at least 50, while the product for use as a heating medium should preferably have a polymerization degree of 10 or below.

The structure of the polymer has been ascertained by infrared absorption, ultraviolet or NMR spectra, elemental analysis, GPC, or the like. As a result, absorption bands which are due to C—N stretching vibration, and di- and mono-substituted phenyls have been observed in the infrared absorption spectra of a 2,6-dimethylphenoldiphenylamine copolymer. These absorption bands have been more clearly ascertained by a different spectrum between the homopolymer of 2,6-dimethylphenol and the aforesaid copolymer of 2,6-dimethylphenol and diphenylamine. The absorption bands which are due to the disubstituted phenol have been found to include one which is due to the 1,4-disubstituted phenol. However, an absorption for the 1,2-disubstitution was not separated from another absorption for monosubstitution of diphenylamine. An absorption characteristic of an aromatic tertiary amine has been observed in the ultraviolet absorption spectrum of the same copolymer and a lower degree of crystallinity has been observed in the X-ray scattering spectrum of the copolymer than in that of the homopolymer of 2,6-dimethylphenol. Certain relationships have been recognized among the results of elemental analysis, the absorption strength due to the H of phenyl groups other than 1-, 2-, 3- and 5-substituted phenyls in the 'H—NMR spectrum, the absorption strength of the aromatic tertiary amine in the ultraviolet spectrum, and the crystallinity of the polymer.

The proportion of the aniline derivatives in the copolymer can be determined by elemental analysis, or precision analysis according to the Kjeldahl method. If the product is intended for an engineering resin, its aniline derivative content is preferably in the range of 0.1 to 10 mol %, and particularly in the range of 1 to 5 mol % in view of the physical and chemical properties required, and the abnormal coloration of the polymer to be prevented.

The copolymer can be put to practical use by molding in accordance with a variety of methods. It is advisable to employ an agent for preventing its deterioration by heat during molding. It is possible to use any agent employed for preventing deterioration of polyphenylene ethers by heat. Examples of the applicable heat stabilizers include phosphite esters such as triphenyl phosphite and tricresyl phosphite, phosphorous amides such as triphenyl phosphite amide, boron oxide, boric acid esters such as pyrocatechinboric acid, phosphoric amides such as hexamethylphosphoric acid triamide, sulfides such as zinc sulfide, sterically hindered phenols such as 2,6-di-butyl-4-methylphenol and mixtures of such compounds. It is sufficient to incorporate a small quantity of the heat stabilizer than into a polyphenylene ether homopolymer, and therefore, it is possible to obtain a product of higher performance. It is also possible to add other agents such as for preventing deterioration by light, and improving the workability of the polymer, or to blend it with other kinds of polymers such as polystyrene, high impact polystyrene, AS and ABS resins, MBS resin polycarbonate, polysulfone, EPDM and SB rubber, to form a polymer alloy.

It is also a useful modification to prepare graft copolymers having vinyl monomers grafted onto the present polymers e.g. in the presence of initiators for radical or ionic polymerization. Specific examples of grafting monomers are styrene compounds, acrylonitrile, $C_{1-18}$-alkylacrylates and -methylacrylates, acrylic acid, maleic acid anhydride, vinyl chloride, ethylene and propylene.

The copolymer of this invention also manifests improved properties when it is blended with a filler such as glass fibers, calcium carbonate, calcium silicate, and clay. Moreover, it has improved adaptability for painting and plating. It is believed that the improved properties of the copolymers according to this invention are attributable to the presence of tertiary amino groups.

This invention is, thus, of significant value, as it improves the drawbacks of polyphenylene ethers, and enables a wider range of application thereof for engineering resins.

The invention will now be described in further detail with reference to examples.

Examples 1 to 4

A mixed solution was prepared from 48 g of 2,6-xylenol, 12 g of diphenylamine, 9 g of bis(salicylaldehyde)ethylenediiminatomanganese (II) ethylenediamine, 210 ml of toluene and 90 ml of methanol, and placed in a 500 ml flask. The flask was placed in a water bath at 50°C, and oxygen was injected thereinto, while its contents were being stirred strongly. The precipitation of polymer particles was observed with a period of 10 minutes after the reaction was started. The reaction products were sampled with the lapse of each of 10, 20 and 40 minutes after the initiation of the reaction. The samples thus obtained were washed with methanol containing a small quantity of hydrochloric acid to yield light yellow polymers. The polymers were refined by repeating precipitation five times with toluene and methanol.

The results of the examples were as follows:

| Example | Reaction Time (min.) | [η] | Aniline Derivatives, mol % |
|---|---|---|---|
| 1 | 5 | 0.10 | Trace |
| 2 | 10 | 0.30 | 1.9 |
| 3 | 20 | 0.83 | 2.1 |
| 4 | 40 | 1.81 | 2.1 |

The [η] values were determined in chloroform at 25°C.

As the foregoing results indicate, there was no substantial change in mol % of copolymerization of diphenylamine despite the increase in [η] in the range of 0.30 to 1.81, and virtually no diphenylamine was found in the sample of Example 1 in which the value of [η] was 0.1. These results are considered to indicate a random copolymerization. The analysis by GPC of the sample according to Example 3 indicates that it is a single polymer having only a single peak at a molecular weight of 42,000 (based on PS).

Comparative Example 1

A polymer was prepared in accordance with the procedures of Example 3, except that 12 g of 2,6-xylenol were used instead of 12 g of diphenylamine. No nitrogen was detected as a result of its elemental analysis for C, H, N and O. Its [η] value was 0.86.

Comparative Example 2

The procedures of Example 3 were repeated, except for the use of 48 g of diphenylamine instead of 48 g of 2,6-xylenol. There was no precipitation of polymer particles, as opposed to Examples 1 to 4, and Comparative Example 1. One liter of methanol was added into the reaction mixture, but it was still impossible to obtain any polymer.

Example 5

A mixed solution was prepared from 54 g of 2,6-dimethylphenol, 26 g of N-methylaniline, 9 g of bis(salicylaldehyde)ethylenediiminatomanganese(II)ethylenediamine, 210 ml of toluene and 90 ml of ethanol, and placed in a 500 ml flask. The flask was placed in a water bath at 40°C, and oxygen was injected thereinto, while its contents were being stirred strongly. The polymerization was carried out for a period of 20 minutes. The precipitation of polymer particles was observed about 10 minutes had elapsed from the start of the reaction. Upon completion of the reaction, the precipitated particles were separated and washed with methanol containing a small quanity of hydrochloric acid to yield a light yellow polymer. The polymer was refined by repeating the precipitation five times in a toluenemethanol mixture.

The polymer thus obtained had a value of [η] of 0.55. Its elemental analysis for C, H, N and O indicated the presence of 1.8 mol % of N-methylaniline. The analysis of the polymer by GPC indicated that it was a polymer having peak at a molecular weight of 90,000 (based on PS).

Example 6

A mixed solution was prepared from 2 g of 2,6-dimethylphenol, 0.1557 g of diphenylamine, 0.0868 g of bis(salicylaldehyde)ethylenediiminatomanganese(II)ethylenediamine,, 11.13 ml of xylene and 4.77 ml of methanol, and placed in a 500 ml flask. The flask was placed in a water bath at 10°C, and oxygen was injected thereinto, while its contents were being stirred strongly. The polymerization was carried out for a period of an hour. The precipitation of polymer particles was observed about 20 minutes had elapsed from the start of the reaction. Upon completion of the reaction, the precipitated particles were separated, and washed with methanol containing a small quantity of hydrochloric acid to yield a light yellow polymer. The polymer was refined by reprecipitation in toluene-methanol mixture. Its elemental analysis for C, H, N and O indicated the presence of 2.2 mol % of N,N-diphenylamine units.

Example 7

A mixed solution was prepared from 20 g of 2,6-xylenol, 55 g of diphenylamine, 7.8 g of bis(salicylaldehyde)ethylenediiminatomanganese(II)ethylenediamine, 110 ml of carbon tetrachloride and 48 ml of butanol, and placed in a one-liter flask. The flask was placed in a water bath at 35°C, and oxygen was injected thereinto, while its contents were being stirred strongly. The precipitation of polymer particles occurred 1.5 hours after the reaction was started. The reaction was continued for 2.5 hours. The precipitated particles were separated, and washed with methanol containing a small quantity of hydrochloric acid to yield a light green polymer. The polymer was refined by reprecipitation in toluene-methanol.

The elemental analysis of the copolymer for C, H, N and O indicated the presence of 14.9 mol % diphenylamine units. The yield was 60% by weight. The ultraviolet spectrum of the copolymer showed an absorption at 303 nm due to the presence of an aromatic tertiary amine, in addition to the absorption observed in a 2,6-xylenol homopolymer at 243, 277 and 283 nm. The starting diphenylamine showed absorption at 287 nm, while triphenylamine and diphenylmethylamine showed absorption at 305 nm and 287.5 nm, respectively.

Examples 8 and 9

Copolymers were prepared in accordance with the procedures of Example 7, except that 28 g and 14 g of diphenylamine were used instead of 55 g diphenylamine. They indicated the presence of 8.1 mol % and 2.2 mol %, respectively, of diphenylamine units.

Example 10

The copolymers obtained in Examples 7 to 9 and a 2,6-xylenol homopolymer were reprecipitated from a chloroformmethanol mixture in accordance with the procedures disclosed in JP—A—4888/1972. The X-ray scattering spectra of these polymers indicated a reduction in their crystallinity with an increase in the degree of copolymerization of the amine therein, as follows:

| | Crystallinity (%) |
|---|---|
| 2,6-Xylenol homopolymer | 32 |
| Copolymer of Example 9 | 21 |
| Copolymer of Example 8 | 11 |
| Copolymer of Example 7 | 6 |

Owing to the reduced crystallinity, it is understood that the present copolymers exhibit improved chemical and mechanical properties such as compatibility with polystyrene or other polymers, and elongation.

Example 11

A procedure was followed after Example 3 except that 2,6-diethylphenol was used in place of 2,6-dimethylphenol. The copolymer contained 2.3 mol % diphenylamine units and has a viscosity [η] of 0.63.

**Claims**

1. Polyphenylene ether copolymers obtained by oxidative coupling of 60 to 99.9 mol % of at least one phenol represented by formula (1), and 0.1 to 40 mol % of at least one aniline-derivative represented by formula (2):

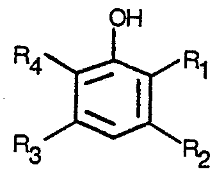

(1)

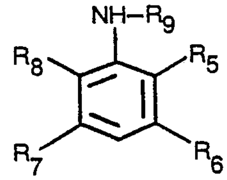

(2)

wherein $R_1$ to $R_8$ each stand for hydrogen, a hydrocarbon group or a substituted hydrocarbon group, and $R_9$ stands for a hydrocarbon or substituted hydrocarbon group.

2. A copolymer as set forth in claim 1, wherein said phenol is a 2,6-disubstituted phenol.

3. A copolymer as set forth in claim 1, wherein said aniline-derivative is present in the quantity of 0.1 to 10 mol %.

4. A copolymer as set forth in claims 1 to 3, characterized by containing grafts of a vinyl monomer.

5. The use of the polyphenylene ether copolymers according to claims 1 to 4 for preparing shaped articles.

**Patentansprüche**

1. Polyphenylenäther-Copolymerisate, hergestellt durch oxidative Kupplung von 60 bis 99,9 Molprozent mindestens eines Phenols der Formel (1), und 0,1 bis 40 Molprozent von mindestens einem Anilin-Derivat der Formel (2):

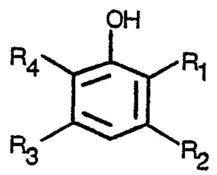

(1)

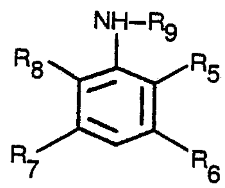

(2)

wobei die Reste $R_1$ bis $R_8$ jeweils ein Wasserstoffatom, einen Kohlenwasserstoffrest oder einen substituierten Kohlenwasserstoffrest bedeuten und $R_9$ einen Kohlenwasserstoffrest oder einen substituierten Kohlenwasserstoffrest bedeutet.

2. Ein Copolymerisat nach Anspruch 1, dadurch gekennzeichnet, daß das genannte Phenol ein 2,6-disubstituiertes Phenol ist.

3. Ein Copolymerisat nach Anspruch 1, dadurch gekennzeichnet, daß das genannte Anilin-Derivat in einer Menge von 0,1 bis 10 Molprozent anwesend ist.

4. Ein Copolymerisat nach Anspruch 1 bis 3, dadurch gekennzeichnet, daß es Pfropf-Anteile eines Vinylmonomeren enthält.

5. Verwendung der Polyphenylenäther-Copolymerisate nach den Ansprüchen 1 bis 4 zur Herstellung von Formteilen.

**Revendications**

1. Copolymères d'éthers de polyphénylène obtenus par couplage par oxydation de 60 à 99,9 moles % d'au moins un phénol représenté par la formule (1), et de 0,1 à 40 moles % d'au moins un dérivé d'aniline représenté par la formule (2):

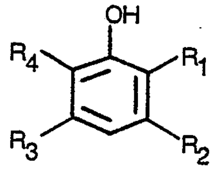

(1)

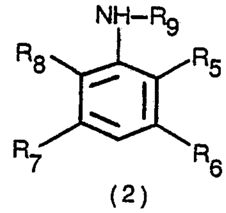

(2)

dans lesquelles $R_1$ à $R_8$ représentent chacun l'hydrogène, un groupe hydrocarburé ou un groupe hydrocarburé substitué et $R_9$ représente un groupe hydrocarburé ou hydrocarburé substitué.

2. Copolymère suivant la revendication 1, caractérisé en ce que le phénol est un phénol 2,6-disubstitué.

3. Copolymère suivant la revendication 1, caractérisé en ce que le dérivé d'aniline est présent à raison de 0,1 à 10 moles %.

4. Copolymère suivant l'une quelconque des revendications 1 à 3, caractérisé en ce qu'il contient des greffes d'un monomère vinylique.

5. Utilisation des copolymères d'éthers de polyphénylène suivant l'une quelconque des revendications 1 à 4, pour a préparation d'articles façonnés.